# EUROPÄISCHE PATENTSCHRIFT

(11) **EP 1 670 657 B1**
(45) Veröffentlichungstag und Bekanntmachung des Hinweises auf die Patenterteilung: **09.01.2008**
(21) Anmeldenummer: 04786804.7
(22) Anmeldetag: 17.09.2004
(51) Int. Cl.: B60J 7/20, B60J 7/047, B60J 7/02, B60J 1/18

(54) **KRAFTFAHRZEUG MIT VOLLSTÄNDIG ÖFFNUNGSFÄHIGEM DACHTEIL**
MOTOR VEHICLE COMPRISING A FULLY OPENING ROOF PART
VEHICULE AUTOMOBILE COMPORTANT UNE PARTIE TOIT A OUVERTURE INTEGRALE

(30) Priorität: 30.09.2003 DE 10345275
(43) Veröffentlichungstag der Anmeldung: 21.06.2006
(73) Patentinhaber: Wilhelm Karmann GmbH, 49084 Osnabrück (DE)
(72) Erfinder: BUNSMANN, Winfried, 49143 Bissendorf (DE); WEISSMÜLLER, Olaf, 49565 Bramsche (DE); HESELHAUS, Udo, 49479 Ibbenbüren (DE)
(86) Internationale Anmeldenummer: PCT/DE2004/002085
(87) Internationale Veröffentlichungsnummer: WO 2005/039912

(56) Entgegenhaltungen:
- EP-A1- 1 151 884
- EP-A2- 0 992 384
- WO-A1-01/19633
- WO-A2-03/076220
- US-A- 5 558 388

## Beschreibung

Die Erfindung betrifft ein Kraftfahrzeug mit öffnungsfähigen Dachteilen nach dem Oberbegriff des Anspruchs 1.

Die DE 100 25 051 C1 zeigt ein Kraftfahrzeug mit starren seitlichen Dachholmen, zwischen denen in einem der dort beschriebenen Ausführungsbeispiele in geschlossener Dachstellung vier hintereinander liegende Dachteile erstreckt sind, die an sich bis in die Ablagestellung erstreckenden Führungsschienen abwärts in die Karosserie verlagerbar sind. Die ersten beiden Dachteile sind miteinander gekoppelt. Diese können daher nur gemeinsam aus der Schließstellung verlagert werden. Dabei liegen Führungsschienen für die vorderen beiden Dachteile unterhalb der hinteren Dachteile, so daß zur Realisierung einer Teilöffnung nur des vorderen Dachbereichs die vorderen Dachteile unter den hinteren hindurchgefahren werden müssen, was die Kopffreiheit erheblich einschränkt und bei modernen, flachen Fahrzeugen bei besetzter hinterer Sitzreihe in jedem Fall mit Verletzungsgefahr verbunden ist, falls die Passagiere nicht sogar vor Verlagerung der vorderen Dachteile aussteigen müssen.

In ihrem anderen Ausführungsbeispiel zeigt die genannte Schrift bei einem Dach mit insgesamt zwei Dachteilen, die Möglichkeit, das vordere Dachteil über die Heckscheibe zu verfahren und beide Dachteile dann auf dem Kofferraum abzulegen. Eine Halterung der Dachteile außerhalb der Karosserie ist jedoch in der Praxis aus ästhetischen und Sicherheitsgründen nicht wünschenswert.

Die US 5,558,388 A zeigt ein Vollcabriolet-Fahrzeug ohne starre Karosseriebereiche oberhalb von Seitenscheiben. Hinsichtlich einer Optimierung der Überschlagsicherheit ist dies nachteilig.

Die DE 202 04 110 U1 zeigt ein Kraftfahrzeug, das beidseits oberhalb seitlicher Fensterbereiche liegende Dachbereiche umfaßt, zwischen denen in einer geschlossenen Dachstellung mehrere plattenförmige Dachteile hintereinander liegen, die aus der geschlossenen Stellung in eine weiter unten in der Karosserie liegende Offenstellung überführbar sind, wobei aus der geschlossenen Stellung der Dachteile die vorderen seitlich geführt unter das dahinter liegende Dachteil verlagerbar sind und die Dachteile aus dieser Stellung mit ihren vorderen Endbereichen anhebbar und in vorne angehobener Stellung in die Karosserie absenkbar sind. Bei der Dachöffnung verringert sich durch die Verlagerung der vorderen Dachteile unter das dahinter liegende die zur Verfügung stehende Kopffreiheit für Insassen des Fahrzeugs.

Der Erfindung liegt das Problem zugrunde, bei einem gattungsgemäßen Kraftfahrzeug die Möglichkeiten der Dachöffnung zu verbessern.

Die Erfindung löst dieses Problem durch ein Kraftfahrzeug mit den Merkmalen des Anspruchs 1. Hinsichtlich weiterer vorteilhafter Ausgestaltungen der Erfindung wird auf die abhängigen Ansprüche 2 bis 9 verwiesen.

Durch die Führung des vorderen Dachteils über das dahinter liegende kann das vordere nach Art eines Schiebedachs auch während der Fahrt benutzt werden, ohne daß es Probleme mit der Kopffreiheit - auch bei einer eventuell besetzten hinteren Sitzreihe - geben könnte. Die weitere Dachöffnung führt ebenfalls nicht zu einer Verringerung der Kopffreiheit, sondern mit beginnendem Absenken der Dachteile werden diese an ihrem vorderen Bereich sofort angehoben, so daß die Kopffreiheit für die Insassen zu keinem Zeitpunkt gegenüber der geschlossenen Stellung verringert ist. Gleichzeitig kann durch die separat verlagerbare Heckscheibe wahlweise eine große Öffnung über dem gesamten Innenraum geschaffen werden, so daß sich ein Cabrio-ähnliches Freiluftgefühl ergibt.

Da das von dem vorderen Dachteil in Stellung des geöffneten Schiebedachs überdeckte Dachteil während der Abwärtsbewegung in die Karosserie nur in seiner entgegen der Fahrtrichtung hinteren Hälfte in einer Führungsschiene geführt ist, ist der vordere Teil beweglich und kann nach oben abgehoben werden. Die hintere Führung ist vorzugsweise durch hintereinander liegende Rollen zu erreichen, deren Abstand hinreichend klein ist, daß sie auch in engen Krümmungen nicht verkanten.

Wenn das vordere Dachteil an den Windschutzscheibenrahmen anschließt, kann bei geöffneten Dachteilen sich diese Öffnung bis an diesen Rahmen heran erstrecken, was das Cabrio-ähnliche Gefühl weiter verbessert, wobei gleichzeitig durch die oberhalb der Seitenscheiben verbleibenden starren Karosseriebereiche die Unfallsicherheit gegenüber einem Voll-Cabriolet erhöht ist.

Auch ein viersitziger Innenraum kann mit nur zwei beweglichen Dachteilen und der verlagerbaren Heckscheibe vollständig abgedeckt oder geöffnet werden. Der mechanische Aufwand ist dabei minimiert, da die Anzahl der zu bewegenden Teile so gering wie möglich ist.

Eine vertikale Ablage sowohl der Heckscheibe als auch der vorderen Dachteile in der Karosserie kann dennoch vorteilhaft möglich sein.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: ein erfindungsgemäßes Kraftfahrzeug in perspektivischer Ansicht von schräg hinten mit einer geschlossenen Heckscheibe und einer in Schließstellung befindlichen Heckklappe sowie mit zwei weiteren, an die obere und in Fahrtrichtung vordere Kante anschließenden beweglichen Plattenteilen,
- Fig. 2: eine ähnliche Ansicht wie Fig. 1 nach Öffnung des vordersten Plattenteils,
- Fig. 3: eine ähnliche Ansicht wie Fig. 2 bei in Offenstellung befindlicher Heckklappe,

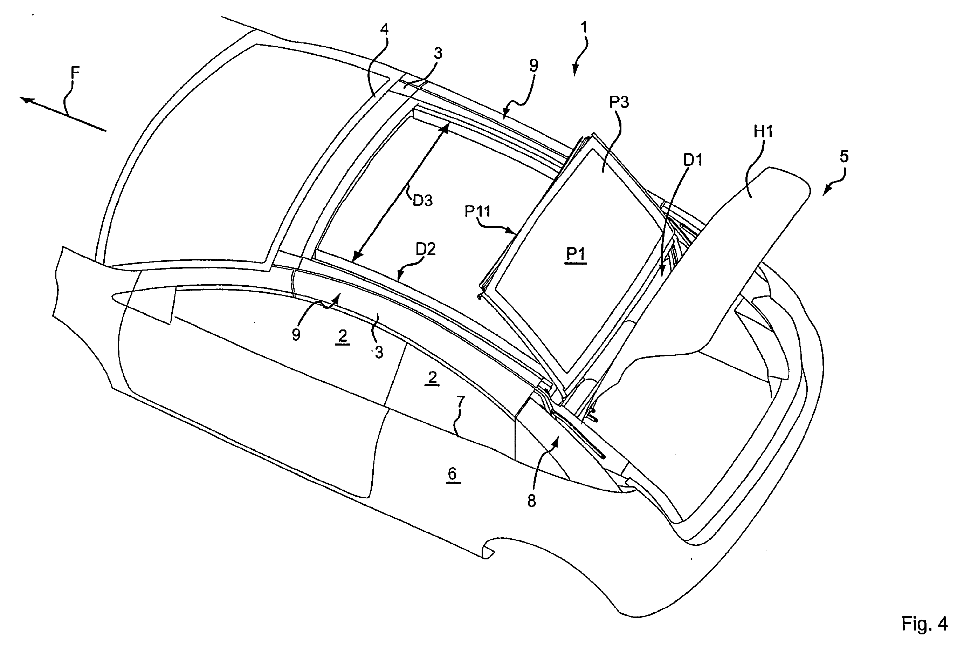

- Fig. 4: eine ähnliche Ansicht wie Fig. 3 während der Öffnung der beiden vorderen Plattenteile,

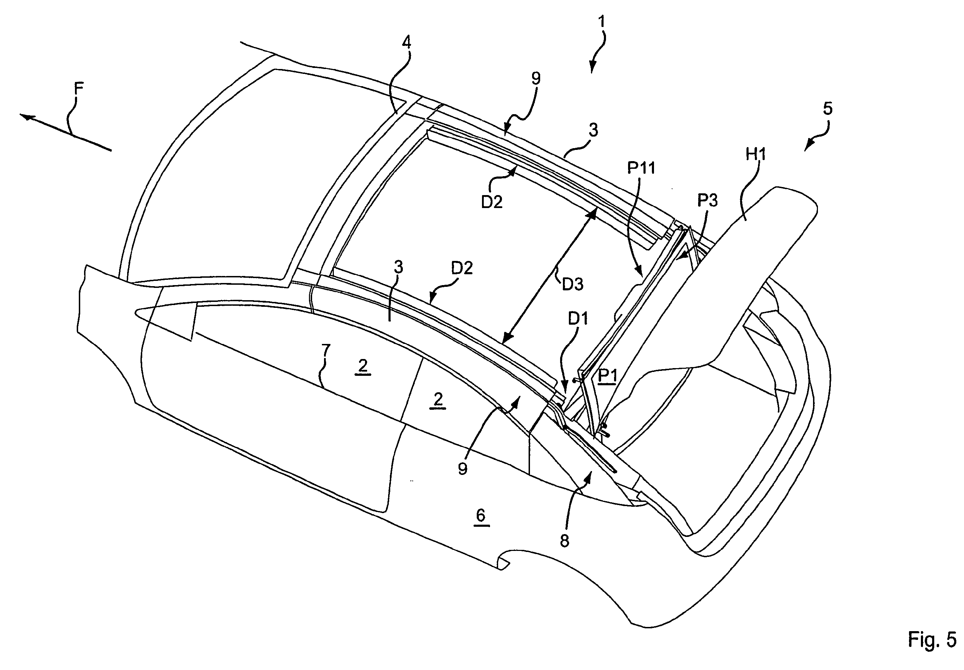

- Fig. 5: eine ähnliche Ansicht wie Fig. 4 bei weiter fortschreitender Öffnung der vorderen Plattenteile,

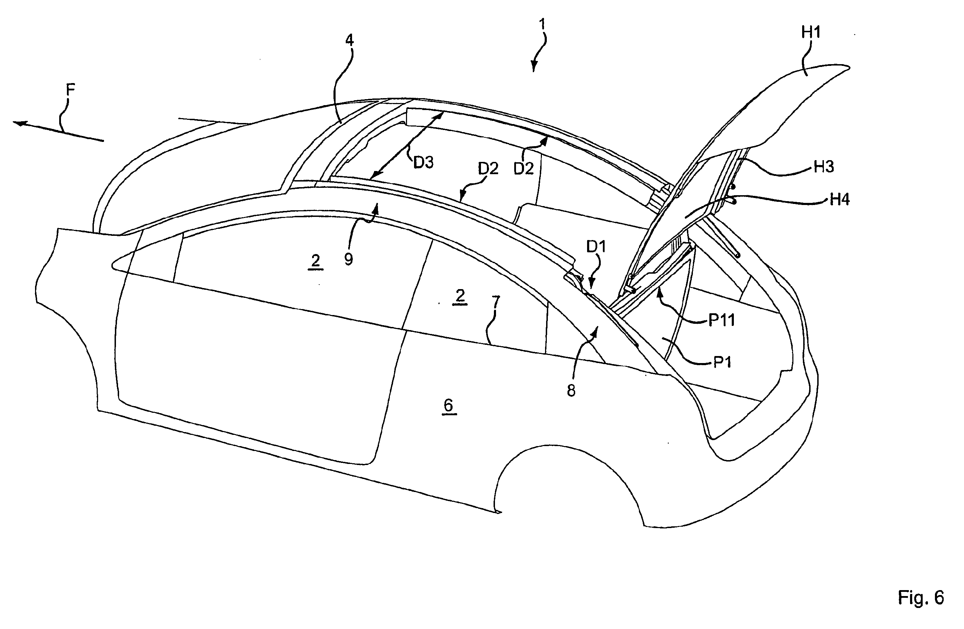

- Fig. 6: eine ähnliche Ansicht wie Fig. 5 mit im wesentlichen vertikal in der Karosserie abgelegten vorderen Plattenteilen,

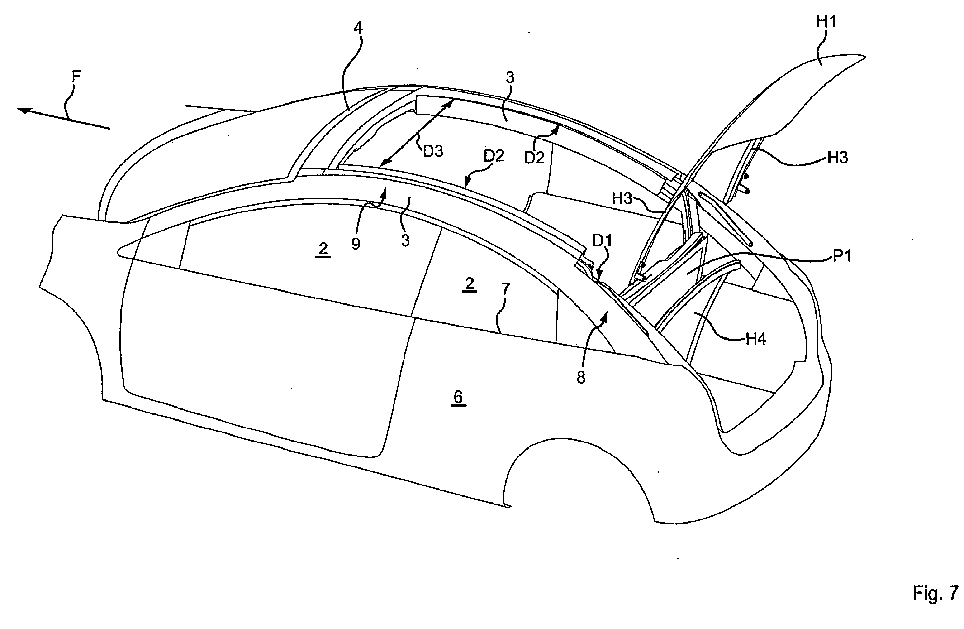

- Fig. 7: eine ähnliche Ansicht wie Fig. 6 mit zusätzlich in Freigabestellung in der Karosserie abgelegter Heckscheibe,
- Fig. 8: eine ähnliche Ansicht wie Fig. 7 nach Schließen der Heckklappe,
- Fig. 9: eine schematisierte Seitenansicht des Fahrzeugs in der Dachstellung nach Fig. 1,

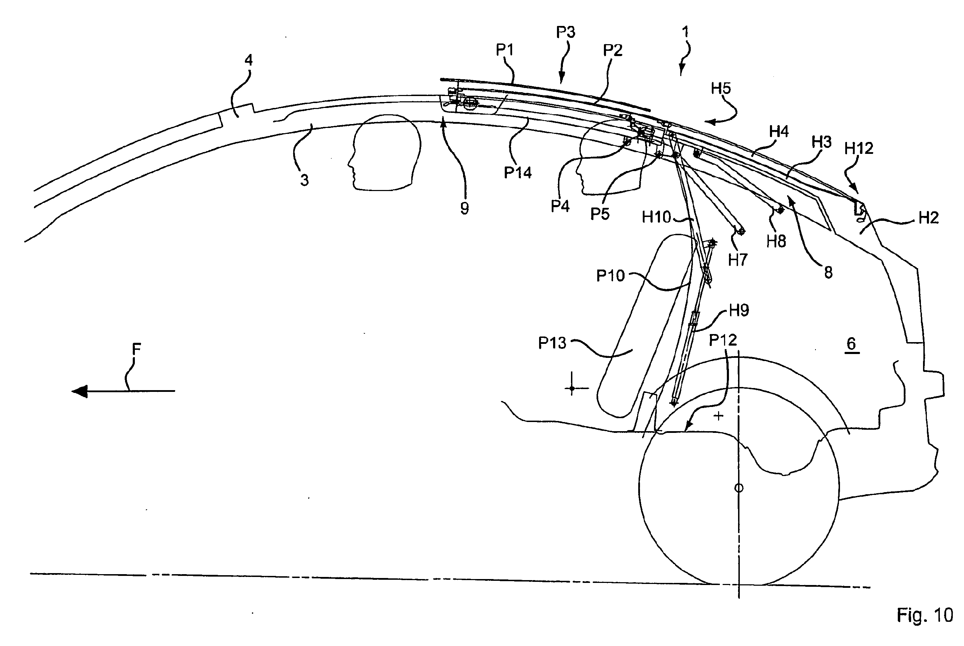

- Fig. 10: eine ähnliche Ansicht wie Fig. 9, jedoch nach Öffnung des vordersten Plattenteils entsprechend der Dachstellung nach Fig. 2,
- Fig. 11: eine ähnliche Ansicht wie Fig. 10, jedoch mit in Offenstellung befindlicher Heckklappe entsprechend der Dachstellung nach Fig. 3,
- Fig. 12: eine ähnliche Ansicht wie Fig. 11, jedoch während der Öffnung der beiden vorderen Plattenteile entsprechend der Dachstellung nach Fig. 4,
- Fig. 13: eine ähnliche Ansicht wie Fig. 12, jedoch während der weiter fortschreitenden Öffnung der vorderen Plattenteile entsprechend der Dachstellung nach Fig. 5,
- Fig. 14: eine ähnliche Ansicht wie Fig. 9, jedoch bei vollständig geöffneten vorderen Plattenteilen entsprechend der Dachstellung nach Fig. 6,
- Fig. 15: eine ähnliche Ansicht wie Fig. 14, jedoch bei Herausschwenken der Heckscheibe aus ihrer Schließstellung in der Heckklappe,
- Fig. 16: eine ähnliche Ansicht wie Fig. 15 bei weiter fortschreitender Öffnung der Heckscheibe,
- Fig. 17: eine ähnliche Ansicht wie Fig. 16 bei vollständig in Freigabestellung befindlicher Heckscheibe entsprechend der Stellung nach Fig. 7,
- Fig. 18: eine ähnliche Ansicht wie Fig. 17 nach Schließen der Heckklappe entsprechend der Stellung nach Fig. 8.

In den Zeichnungsfiguren ist generell ein mit einer Rückbank versehenes vier- oder fünfsitziges Kraftfahrzeug 1 dargestellt. Dies ist nicht zwingend. Auch kann beispielsweise ein Zweisitzer erfindungsgemäß ausgebildet sein.

Das Fahrzeug 1 umfaßt oberhalb seitlicher Scheiben 2 in sich jeweils starre Dachholme 3, die in Ansicht von oben im wesentlichen längs zur Fahrzeugerstreckung zwischen einem Windschutzscheibenrahmen 4 und dem Heckbereich 5 des Fahrzeugs liegen und in Seitenansicht bogenförmig verlaufen. Diese sind hier Bestandteil der Fahrzeugkarosserie 6.

Im hinteren Fahrzeugbereich 5 ist eine Heckklappe H1 vorgesehen. Diese ist hier im wesentlichen U-förmig ausgebildet mit einem unteren Querschenkel H2, der beispielsweise Teile der Rückleuchten und/oder einen Kennzeichenträger umfassen kann, und mit Seitenschenkeln H3, die in geschlossener Stellung der Heckklappe H1 in Fahrtrichtung F entsprechend dem Verlauf der Dachholme 3 vorwärts und aufwärts weisen. Zwischen den Teilen H2 und H3 ist in ihrer Schließstellung eine insbesondere starre Heckscheibe H4, die beispielsweise aus Kunststoff oder vorteilhaft Glas bestehen kann, aufgenommen. In dieser Stellung dienen die Seitenschenkel H3 somit als seitliche Rahmenteile der Heckscheibe H4. Die dabei in Fahrtrichtung F obere und vordere Kante H5 der Heckscheibe H4 bildet dabei gleichzeitig auch die obere und vordere Kante der Heckklappe H1 aus und ist wegen deren U-Form von keinem Querträger untergriffen.

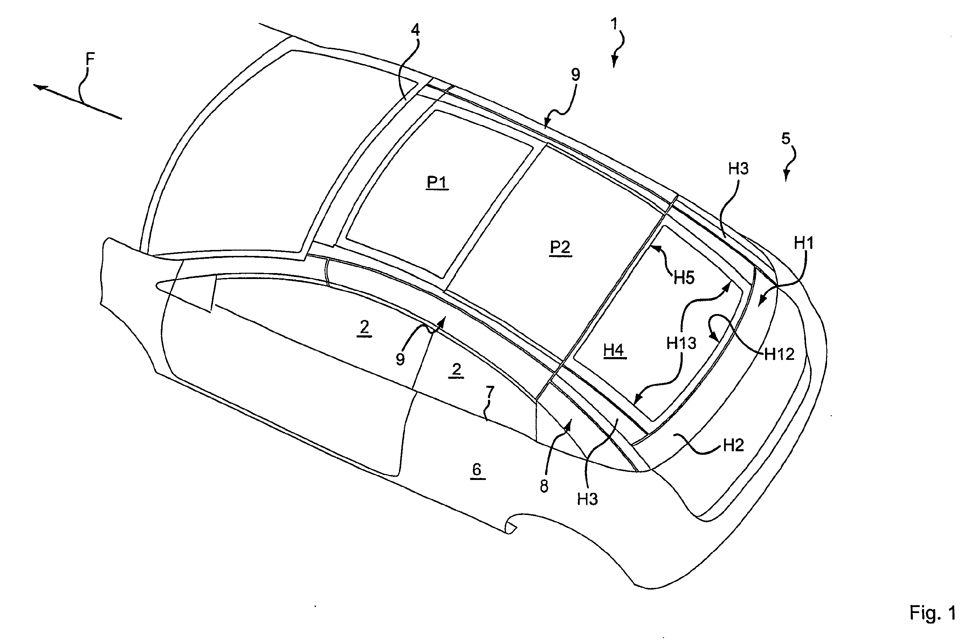

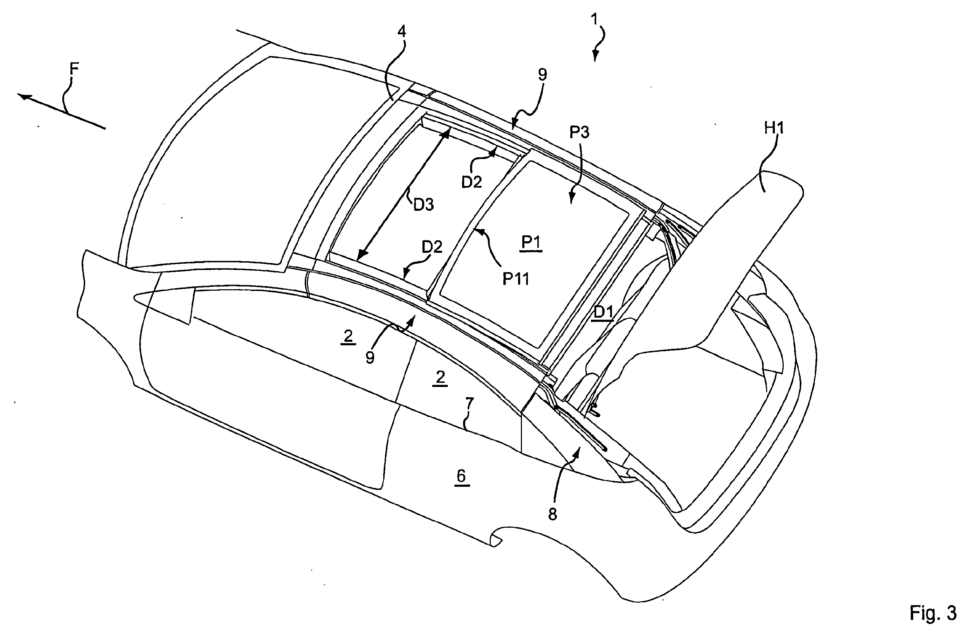

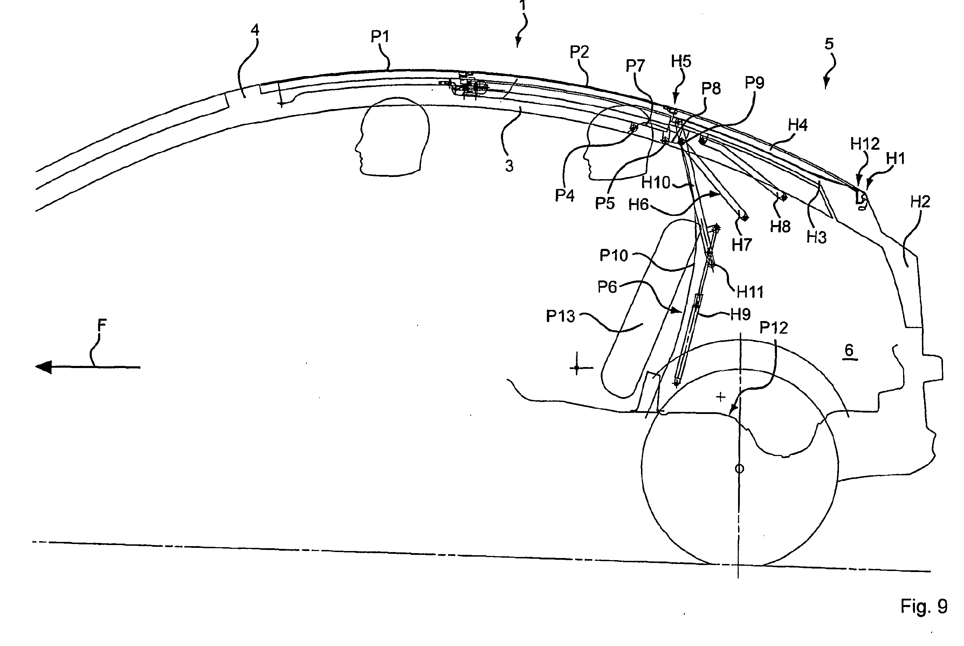

Die Heckklappe H1 ist insgesamt zwischen einer geschlossenen (Fig. 1) und einer offenen Stellung (Fig. 3) beweglich an der Karosserie 6 gehalten. Die Öffnungsbewegung ist keine reine Schwenkbewegung, sondern erfolgt derart, daß in ihrer Offenstellung die vordere Kante H5 der Heckklappe H1 gegenüber ihrer geschlossenen Stellung nach hinten verlagert ist. Hierfür ist (Fig. 9 ff.) die Heckklappe H1 an jeder Fahrzeugseite zum Beispiel über ein Mehrgelenk, hier ein Viergelenk H6, gehalten. Dessen Lenker H7 und H8 sind jeweils seitlich in der Fahrzeugkarosserie 6, etwa im hinteren Bereich der Dachholme 3, angelenkt.

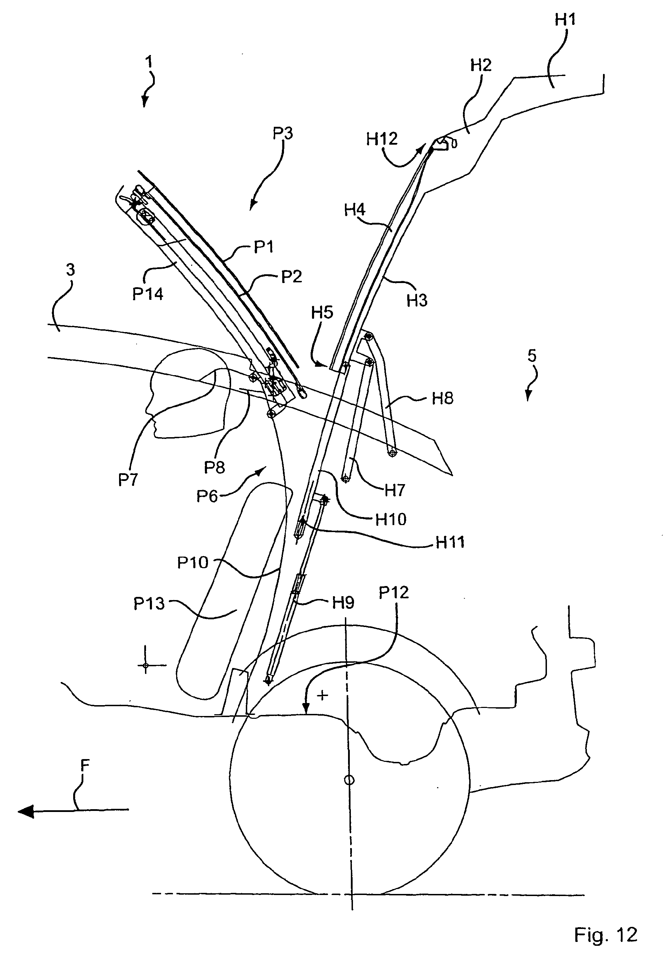

Aus der in den Figuren 3 und 12 gezeigten Offenstellung der Heckklappe H1 heraus ist die Heckscheibe H4 in ihre separate Freigabestellung in die Fahrzeugkarosserie 6 absenkbar.

Hierfür ist beispielsweise die Heckscheibe H4 über seitlich in der Karosserie 6 angeordnete Gestängeteile H9, H10 mit dieser verbunden. Das Gestängeteil H9 ist dabei ein ein- und ausfahrbarer Zylinder, der wegen seiner Längenvariabilität in der Lage ist, auch bei geschlossener Heckscheibe H4 die Öffnungsbewegung der dann diese umfassenden Heckklappe H1 mitzugehen (Übergang von Fig. 1 zu Fig. 3).

Der Zylinder H9 ist einenends an der Karosserie 6 angelenkt. Er greift mit seinem freien Ende an einem weiter oberhalb an der Karosserie 6 angelenkten Lenker H10 an, wobei dieser Angriffspunkt zur Anlenkung H11 des Lenkers H10 beabstandet liegt und sich somit ein Hebelarm ergibt.

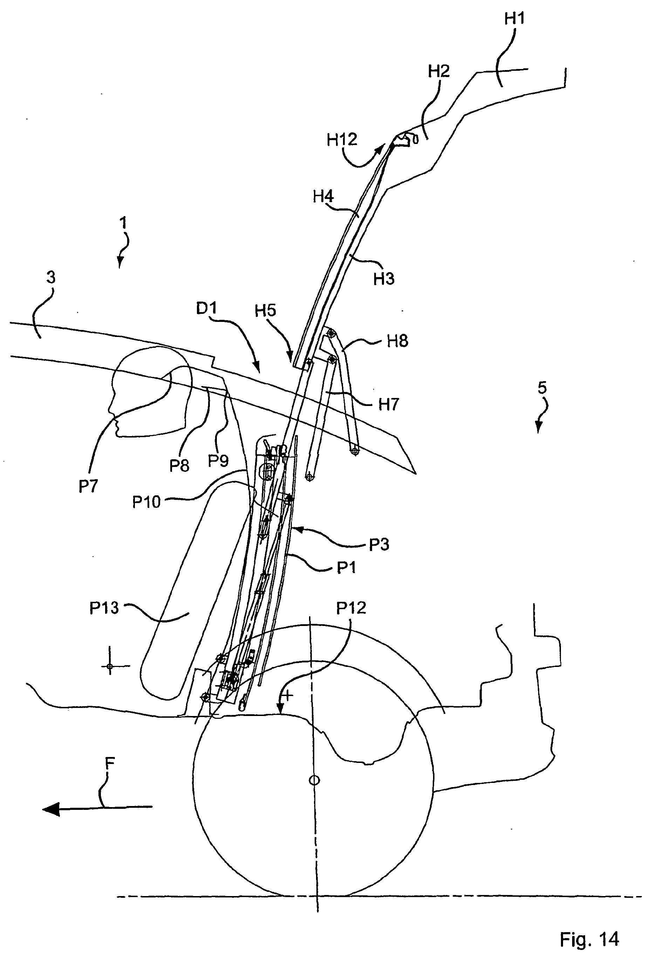

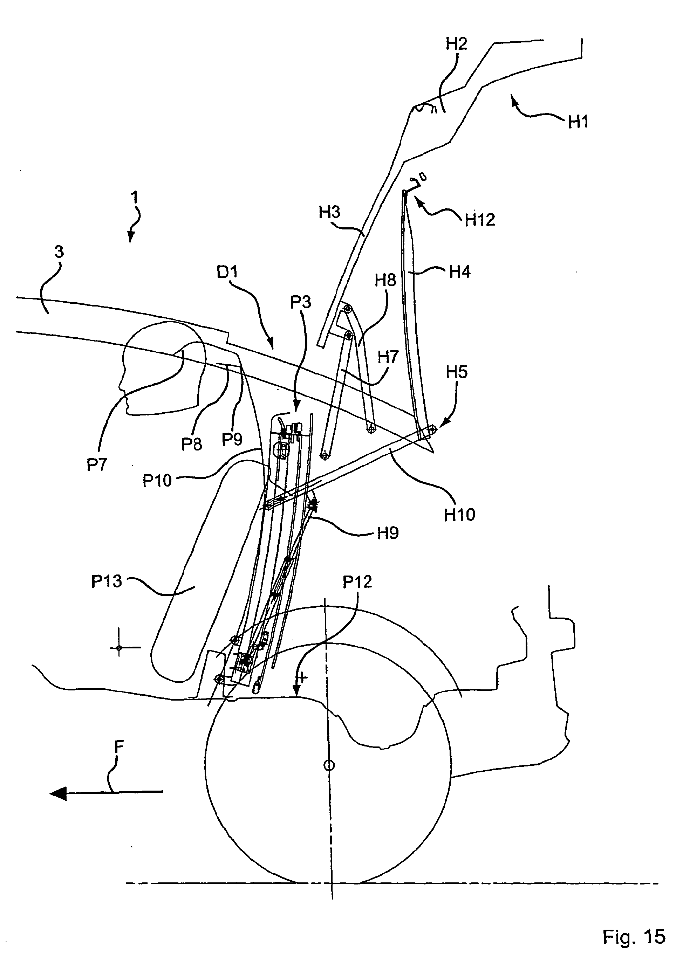

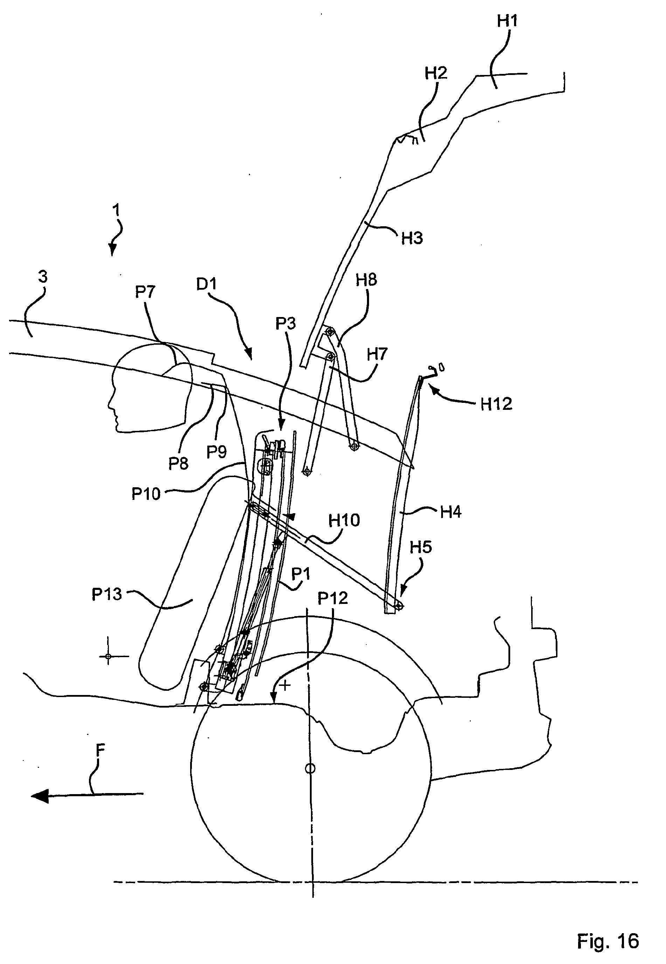

Der Lenker H10 greift mit seinem freien Ende seitlich der Oberkante H5 der Heckscheibe H4 an. Um diese in Freigabestellung zu überführen, wird zunächst die Heckscheibe H4 an ihrem in geschlossener Stellung die untere Kante bildenden Ende H12 vom Mittelschenkel H2 der Heckklappe H1 entriegelt (Übergang von Fig. 14 zu Fig. 15), wobei die Scheibe H4 für eine manuelle Bedienung an ihren Seitenkanten H13 von einem Benutzer gehalten und nahezu parallel abwärts verlagert werden kann (Fig. 16). Dabei wird der Hebel H10 um das Gelenk H11 abwärts verschwenkt, und der Zylinder H9 fährt ein und schwenkt nach vorne. Damit wird die Heckscheibe H4 insgesamt zumindest nahezu vertikal und leicht nach vorne verlagert platzsparend abgelegt, hier im Paket mit weiteren Dachteilen, die unten noch näher erläutert sind.

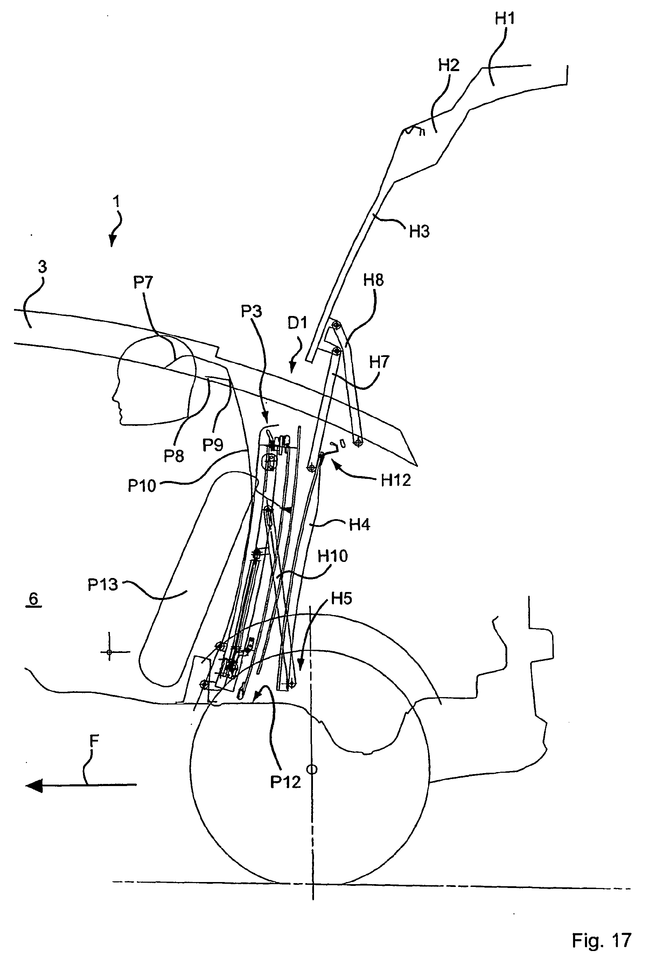

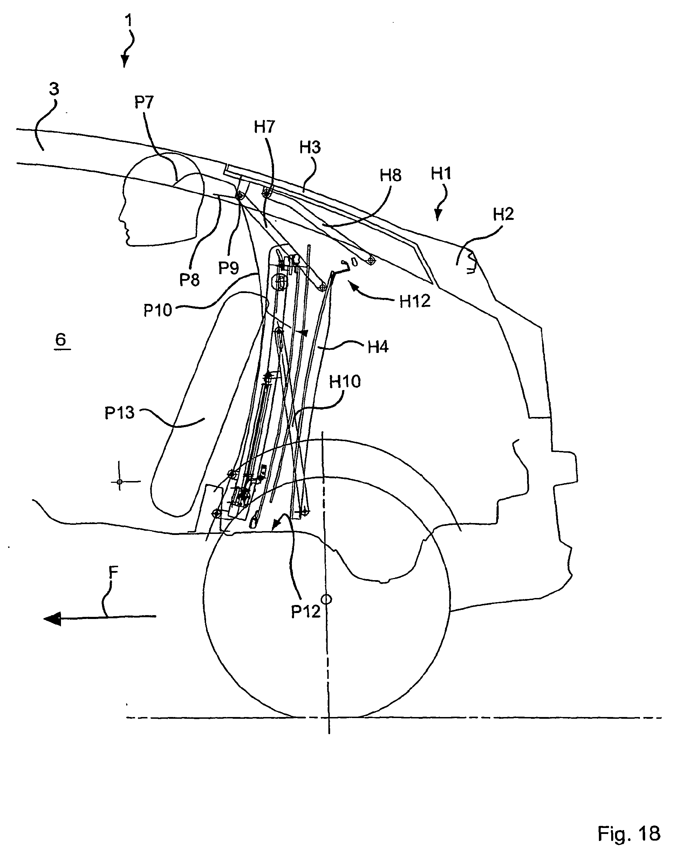

In dieser Freigabestellung (Fig. 17) ist die Heckscheibe H4 unterhalb einer seitlichen Fensterbrüstungslinie 7 der Karosserie 6 mit Abstand zur Heckklappe H1 gehalten. Der Raum zwischen den Seitenschenkeln H3 und dem unteren Querschenkel H2 der Heckklappe H1 ist vollständig geöffnet. Diese kann dann wieder geschlossen werden (Fig. 18).

Das Kraftfahrzeug 1 umfaßt in geschlossener Stellung der Heckscheibe H4 (Fig. 1) an ihre vordere Kante H5 unmittelbar anschließend und in Fahrtrichtung F vorgeordnet weitere bewegliche Plattenteile P1, P2. Ihre Anzahl ist je nach Dachlänge variabel; sie liegen im geschlossenen Zustand im wesentlichen horizontal, fluchtend hintereinander sowie fluchtend zu der Heckscheibe H4 und stützen sich unmittelbar oder mittelbar an den seitlichen Dachholmen 3 ab. Die - hier zwei - Dachteile P1 und P2 können aus unterschiedlichen Materialien, etwa metallischen, Glas- oder Kunststoffwerkstoffen, gebildet sein. Insbesondere können sie im wesentlichen transparent ausgebildet sein. Dabei empfiehlt es sich, um Schattenstreifen im Innenraum weitgehend zu vermeiden, die Dachteile P1, P2 in Fahrzeuglängsrichtung nicht zu schmal ausfallen zu lassen. Eine jeweilige Mindesterstreckung von 40 cm in Fahrzeuglängsrichtung ist daher vorteilhaft.

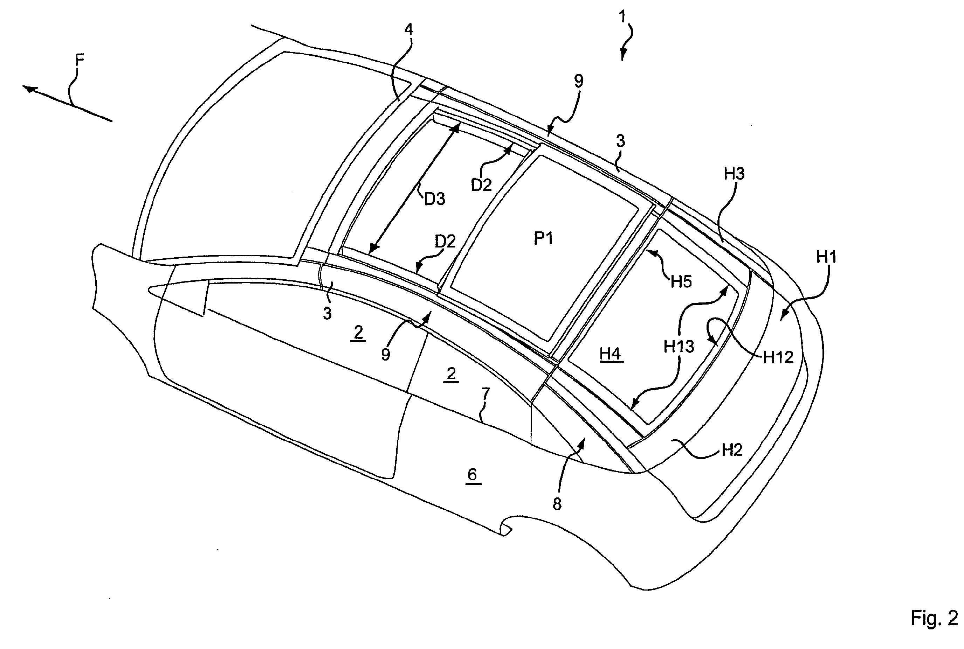

Das vordere Dachteil P1 ist aus der geschlossenen Stellung heraus nach Art eines Schiebedachs über das dahinter liegende Dachteil P2 verlagerbar und liegt in seiner geöffneten Stellung im wesentlichen parallel auf diesem (Fig. 2 ff.). Die so gebildete Stellung der Dachteile P1, P2 stellt eine mögliche dauerhafte Fahrstellung dar. Aus ihr heraus kann jedoch auch eine weitere Dachöffnung mit Abwärtsverlagerung der als Paket P3 übereinanderliegenden Dachteile P1 und P2 erfolgen, um diese innerhalb der Karosserie 6 abzusenken.

Hierfür ist das so gebildete Dachteilpaket P3 im hinteren Bereich des hinteren Dachteils P2 über zwei hintereinanderliegende Führungsrollen P4, P5 in einer seitlichen Führungsschiene P6 abgestützt.

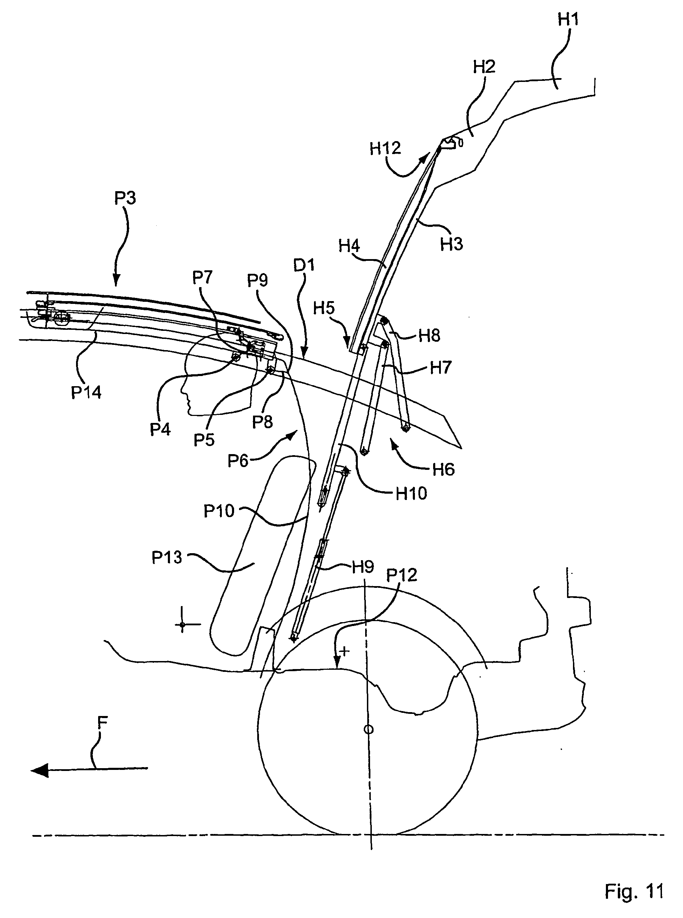

Bei beginnender Ablage des Dachteilpakets P3 in der Karosserie 6 (Übergang von Fig. 11 zu Fig. 12) läuft die vordere P4 der beiden Rollen auf einem aufwärts gerichteten Führungsbahnabschnitt P7 nach hinten, wohingegen die hintere Führungsrolle P5 zunächst in einem nahezu horizontal liegenden Führungsbahnabschnitt P8 läuft. Der Abschnitt P8 mündet an der Stelle P9 in den leicht gekrümmt abwärts laufenden Abschnitt P10 der Führungsschiene P6 ein.

Durch die nach hinten aufwärts gerichtete Steigung des Abschnitts P7 wird mit der beginnenden Bewegung des Dachteilpakets P3 sofort dessen vorderer Rand P11 angehoben, wodurch die Kopffreiheit auch für hinten sitzende Passagiere in keiner Phase der Bewegung unter das Maß bei geschlossenen Dachteilen P1, P2 sinkt. Dies ist ein entscheidender Vorteil.

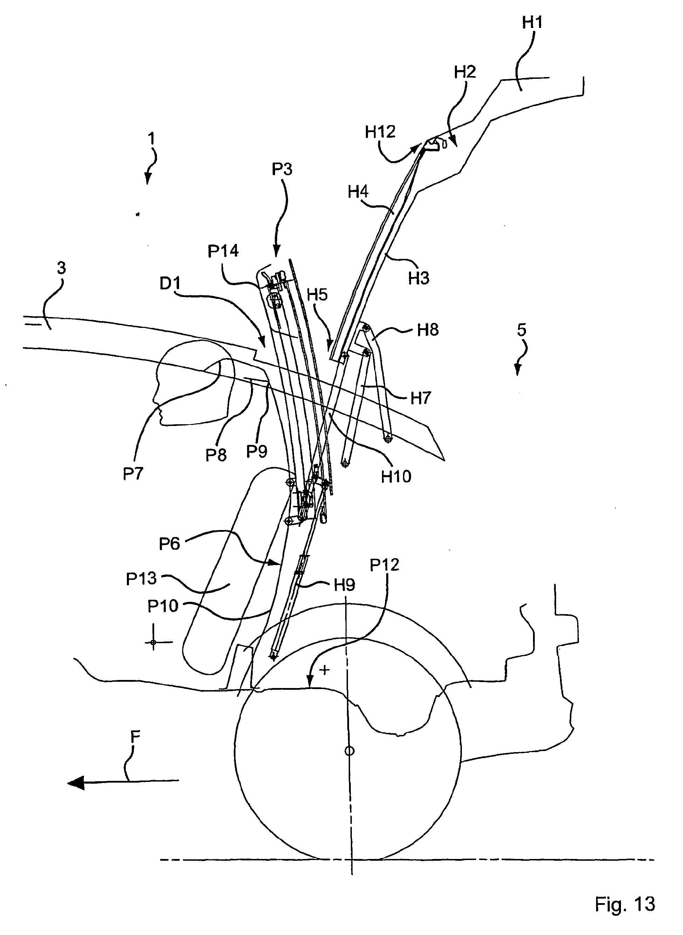

Bei Eintritt der hinteren Führungsrolle P5 in den Abschnitt P10 läuft die vordere Führungsrolle P4 in einem dem Verlauf der seitlichen Dachholme 3 folgenden Abschnitt der Führungsbahn P6, wodurch sich bei der nahezu vertikalen Abwärtsbewegung der hinteren Führungsrolle P5 die Steilstellung des Dachpakets P3 noch verstärkt und dieses bei Eintritt auch der vorderen Führungsrolle P4 in den Abschnitt P10 nahezu senkrecht steht (Fig. 13). In dieser Stellung kann es bis zum inneren Fahrzeugboden P12 abwärts gleiten und raumsparend etwa hinter den Lehnen P13 der zweiten Sitzreihe nahezu vertikal stehen (Fig. 14).

Das Schließen der Dachteile P1, P2 läuft entsprechend umgekehrt ab, wobei auch dort in keiner Phase der Bewegung die Kopffreiheit unter das Maß bei geschlossenen Dachteilen sinkt. Die Fahrzeugsilhouette kann somit sehr flach und sportlich gehalten werden.

Wenn das vordere Dachteil P1 direkt an den Windschutzscheibenrahmen 4 anschließt, läßt sich eine sehr große Dachöffnung herstellen. Auch können die seitlichen Karosseriebereiche 3 oberhalb der Seitenscheiben sehr schmal ausgebildet werden, so daß die Breite der Plattenteile P1 und P2 sich bis fast zur Oberkante der Seitenscheiben erstrecken kann.

Um die Ablage der Dachteile P1 und P2 zu erleichtern, kann die Heckklappe H1, wie oben bereits beschrieben, derart öffnen, daß in ihrer Offenstellung die vordere Kante H5 gegenüber der geschlossenen Stellung nach hinten verlagert ist. Dadurch ergibt sich in Fahrtrichtung F vor der geöffneten Heckklappe H1 ein Durchtrittsraum D1, der vollständig hinter der in geschlossenem Zustand rückwärtigen Kante des hinteren Dachteils P2 liegt. Damit kann der den Fahrzeuginnenraum durchgreifende Ablageweg des Dachteilpakets P3 weit nach hinten im Fahrzeug 1 verlagert werden. Eventuelle Insassen auf einer hinteren Sitzbank werden davon nicht gestört. Auch bei einem eventuellen Zweisitzer liegt der Ablageweg des Dachteilpakets P3 in jedem Fall hinter den Insassen. Diese werden durch die Dachteilablage nicht in ihrer Kopffreiheit eingeschränkt.

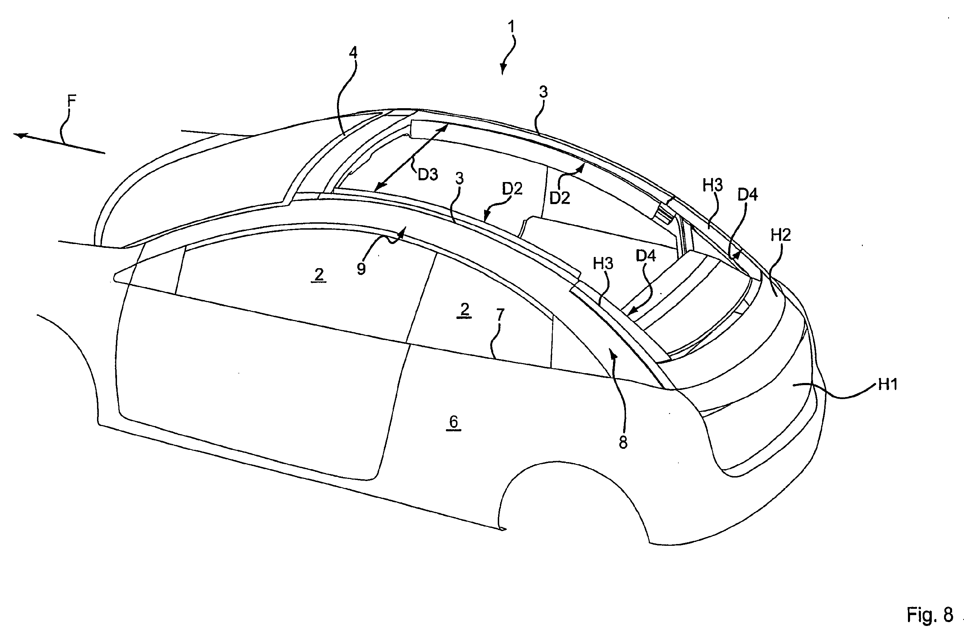

Dabei können, was optisch sehr vorteilhaft ist, im geschlossenen Zustand der Heckklappe H1 die die Heckscheibe H4 seitlich einfassenden Rahmenteile H3 fluchtend zu den in Fahrtrichtung nach vorne anschließenden Dachholmen 3 liegen. Insbesondere ist dann in der der Heckscheibe H4 bzw. den beweglichen Dachteilen P1, P2 zugewandten Innenkante D2 der genannten Teile H3, 3 keine Abstufung erforderlich, sondern diese Kante D2 läuft über den gesamten Innenraum gradlinig (Fig. 8).

Bei Öffnung der Heckklappe H1 wird dennoch ein Durchtrittsraum D1 freigegeben, der breiter als die lichte Weite D3 zwischen den Innenkanten D2 ist. Damit können die Dachteile P1 und P2 sehr breit gestaltet werden. Etwa kann auch noch eine seitlich das Dachteil P2 überragende Führungsschiene P14, in der das vordere Dachteil in seiner Offenstellung geführt ist, mit dem Dachpaket P3 durch den verbreiterten Durchtrittsraum D1 in den Innenraum der Karosserie 6 eintreten.

Zur Öffnung der beiden Teile P1 und P2 sowie der Heckscheibe H4 wird zunächst die Heckklappe H1 geöffnet, um den Durchtrittsraum D1 freizugeben. Anschließend können die Dachteile P1, P2 in der oben geschilderten Weise geöffnet werden.

Aus der geöffneten Stellung der Heckklappe H1 heraus kann vorher oder danach auch die Heckscheibe H4 aus den sie umgebenden Teilen H2, H3 in einer der beschriebenen Arten geöffnet und in platzsparender Parallellage zu den Dachteilen P1 und P2 im Innenraum abgelegt werden. Es ist ebenso möglich, daß entweder nur die Heckscheibe H4, nur das vordere Plattenteil P1, die Heckscheibe H4 und das Plattenteil P1 oder nur die vorderen Dachteile P1 und P2 geöffnet werden, je nach Wunsch.

Die Erfindung ist sowohl bei Fahrzeugen mit manuell zu bewegenden Dachteilen P1, P2, H4 als auch bei voll- oder teilautomatischer Beweglichkeit der Teile anwendbar.

## Patentansprüche

1. Kraftfahrzeug (1) mit einer Fahrzeugkarosserie (6), die beidseits oberhalb seitlicher Fensterbereiche (2) liegende starre Karosseriebereiche (3) umfaßt, zwischen denen in einer geschlossenen Dachstellung zumindest zwei plattenförmige Dachteile (P1 ; P2) hintereinander liegen, die gegenüber den seitlichen Karosseriebereichen (3) beweglich sind und aus der geschlossenen Stellung in eine weiter unten in der Karosserie (6) liegende Offenstellung überführbar sind,
**dadurch gekennzeichnet,**
**daß** aus der geschlossenen Stellung der Dachteile (P1;P2) zumindest ein vorderes (P1) nach Art eines Schiebedachs seitlich geführt über das dahinter liegende Dachteil (P2) verlagerbar ist und die Dachteile (P1 ; P2) aus dieser Stellung mit ihren vorderen Endbereichen (P11) anhebbar und in vorne angehobener Stellung in die Karosserie (6) absenkbar sind, wobei das von dem vorderen Dachteil (P1) in Stellung des geöffneten Schiebedachs überdeckte Dachteil (P2) während der Abwärtsbewegung in die Karosserie (6) nur in seiner entgegen der Fahrtrichtung (F) hinteren Hälfte in einer Führungsschiene (P6) geführt (P4;P5) ist, und daß im geschlossenen Zustand der Dachteile (P1;P2) an das hintere (P2) eine zwischen einer Offenund einer Schließstellung separat verlagerbare Heckscheibe (H4) unmittelbar anschließt.

2. Kraftfahrzeug (1) nach Anspruch 1
**dadurch gekennzeichnet,**
**daß** das vordere Dachteil (P1) das hinter einem Windschutzscheibenrahmen (4) nächstfolgende Dachteil ist.

3. Kraftfahrzeug (1) nach einem der Ansprüche 1 oder 2,
**dadurch gekennzeichnet,**
**daß** jedes der Dachteile (P1 ; P2) in Fahrzeuglängsrichtung eine Erstreckung von zumindest 40 Zentimetern aufweist.

4. Kraftfahrzeug (1) nach einem der Ansprüche 1 bis 3,
**dadurch gekennzeichnet,**
**daß** die Dachteile (P1 ; P2) im wesentlichen transparent sind.

5. Kraftfahrzeug (1) nach einem der Ansprüche 1 bis 4,
**dadurch gekennzeichnet,**
**daß** die Heckscheibe (H4) in ihrer geschlossenen Stellung in einem im wesentlichen U-förmigen Ausschnitt einer Heckklappe (H1) gehalten und von dieser zumindest bereichsweise seitlich (H3) und an ihrer Unterkante (H2) umgeben ist.

6. Kraftfahrzeug nach einem der Ansprüche 1 bis 5,
**dadurch gekennzeichnet,**
**daß** die Heckscheibe (H4) und die weiteren Dachteile (P1 ; P2) in Offenstellung parallel zueinander liegen.

7. Kraftfahrzeug nach einem der Ansprüche 5 oder 6,
**dadurch gekennzeichnet,**
**daß** die Heckklappe (H1) bei ihrer Öffnung mit ihrem in Fahrtrichtung (F) am weitesten vorne liegenden Bereich (H5) entgegen der Fahrtrichtung verlagerbar ist und dabei in dem bei geschlossener Heckklappe (H1) übergriffenen Bereich einen Durchtrittsraum (D1) zur Verlagerung der vorderen Dachteile (P1;P2) in die Fahrzeugkarosserie freigibt.

8. Kraftfahrzeug (1) nach Anspruch 7,
**dadurch gekennzeichnet,**
**daß** die seitlichen Rahmenteile (H3) in geschlossener Stellung der Heckklappe (H1) fluchtend zu in Fahrtrichtung (F) anschließenden und oberhalb von Seitenscheiben (2) verlaufenden Karosseriebereichen (3) des Fahrzeugs (1), die zumindest Dachholme umfassen, liegen.

9. Kraftfahrzeug (1) nach Anspruch 8,
**dadurch gekennzeichnet,**
**daß** der Durchtrittsraum (D1) gegenüber der lichten Weite (D3) zwischen den Dachholmen (3) in Fahrzeugquerrichtung erweitert ist.

## Claims

1. A motor vehicle (1) with a vehicle body (6), which includes, on both sides, rigid car body areas (3) which are situated above lateral window areas (2) and between which, in a closed roof position, at least two plate-shaped roof parts (P1 ; P2) lie behind one another which are movable in respect of the lateral car body areas (3) and which can be transferred out of the closed position into an open position lying further below in the car body (6),
**characterised in that**
from the closed position of the roof parts (P1 ; P2), at least one front roof part (P1) laterally guided in the manner of a sliding roof is able to be displaced over the roof part (P2) lying behind it and the roof parts (P1 ; P2) are able to be lifted out of this position with their front end areas (P11) and can be lowered into the car body (6) in the front-raised position, whereby the roof part (P2), which is covered by the front roof part (P1) in the opened sliding roof position, is guided (P4;P5), during the downward movement into the car body (6) only in its rear half against the direction of travel (F), in a guide rail (P6), and **in that**, in the closed state of the roof parts (P1;P2), a rear window (H4), which is separately displaceable between an open position and a closed position, is directly attached to the rear roof part (P2).

2. The motor vehicle (1) according to Claim 1,
**characterised in that**
the front roof part (P1) is the roof part which is proximate behind a windscreen frame (4).

3. The motor vehicle (1) according to one of claims 1 or 2,
**characterised in that**
each of the roof parts (P1 ;P2) has a span of at least 40 centimetres in the vehicle longitudinal direction.

4. The motor vehicle (1) according to one of claims 1 to 3,
**characterised in that**
the roof parts (P1 ; P2) are substantially transparent.

5. The motor vehicle (1) according to one of claims 1 to 4,
**characterised in that**
the rear window (H4), in its closed position, is held in a substantially U-shaped cut-out of a rear flap (H1) and is surrounded by this, at least in areas, laterally (H3) and at its lower edge (H2).

6. The motor vehicle according to one of Claims 1 to 5,
**characterised in that**
the rear window (H4) and the further roof parts (P1 ; P2) lie parallel to one another in the open position.

7. The motor vehicle according to one of Claims 5 or 6,
**characterised in that**
the rear flap (H1), when it is opened, is displaceable against the direction of travel (F) with its area (H5) which lies furthest forward and thereby uncovers, in the area which is overlapped when the rear flap (H1) is closed, a passage space (D1) for displacing the front roof parts (P1;P2) into the vehicle body.

8. The motor vehicle (1) according to Claim 7,
**characterised in that**
the lateral frame parts (H3), in the closed position of the rear flap (H1), are situated flush with body areas (3) of the vehicle (1), which connect in the direction of travel (F) and run above side windows (2) and which include at least roof posts.

9. The motor vehicle (1) according to Claim 8,
**characterised in that**
the passage space (D1) is broadened in the vehicle transverse direction compared to the clear width (D3) between the roof posts (3).

## Revendications

1. Véhicule automobile (1) comprenant une carrosserie de véhicule (6), qui présente des régions de carrosserie (3) rigides situées de part et d'autre au-dessus de régions de fenêtre latérales (2), entre lesquelles, dans une position fermée du toit, au moins deux parties de toit (P1 ; P2) en forme de plaque sont disposées l'une derrière l'autre et peuvent se déplacer par rapport aux régions de carrosserie (3) latérales et qui peuvent être transférées de la position fermée dans une position ouverte située plus bas dans la carrosserie (6),
**caractérisé en ce que**
au moins une partie de toit avant (P1) peut être décalée de la position fermée des parties de toit (P1 ; P2), de manière guidée latéralement à la manière d'un toit ouvrant, par-dessus la partie de toit (P2) située derrière et les parties de toit (P1 ; P2) peuvent être soulevées de cette position avec leurs régions d'extrémité avant (P11) et être abaissées dans la carrosserie (6) dans une position soulevée vers l'avant, la partie de toit (P2) recouverte par la partie de toit avant (P1) dans la position ouverte du toit ouvrant, étant guidée (P4 ; P5) pendant le mouvement descendant dans la carrosserie (6) uniquement dans sa moitié arrière dans le sens opposé au sens de conduite (F), dans un rail de guidage (P6), et **en ce que** dans l'état fermé des parties de toit (P1 ; P2), une vitre arrière (H4) déplaçable séparément entre une position d'ouverture et une position de fermeture se raccorde directement à la partie de toit arrière (P2).

2. Véhicule automobile (1) selon la revendication 1,
**caractérisé en ce que**
la partie de toit avant (P1) est la partie de toit située derrière et suivant immédiatement un cadre de pare-brise (4).

3. Véhicule automobile (1) selon l'une quelconque des revendications 1 ou 2,
**caractérisé en ce que**
chacune des parties de toit (P1 ; P2) présente dans la direction longitudinale du véhicule une étendue d'au moins 40 centimètres.

4. Véhicule automobile (1) selon l'une quelconque des revendications 1 à 3,
**caractérisé en ce que**
les parties de toit (P1 ; P2) sont essentiellement transparentes.

5. Véhicule automobile (1) selon l'une quelconque des revendications 1 à 4,
**caractérisé en ce que**
la vitre arrière (H4), dans sa position fermée, est maintenue dans une découpe essentiellement en forme de U d'un hayon arrière (H1) et est entourée par celui-ci au moins en partie latéralement (H3) et au niveau de son arête inférieure (H2).

6. Véhicule automobile selon l'une quelconque des revendications 1 à 5,
**caractérisé en ce que**
la vitre arrière (H4) et les autres parties de toit (P1 ; P2) se situent parallèlement les unes aux autres dans la position ouverte.

7. Véhicule automobile selon l'une quelconque des revendications 5 ou 6,
**caractérisé en ce que**
le hayon arrière (H1), lors de son ouverture, peut être décalé avec sa région (H5) située le plus en avant dans le sens d'avance (F) à l'encontre du sens d'avance, et libère ce faisant, dans la région saisie par le haut lorsque le hayon arrière (H1) est fermé, un espace de passage (D1) pour le dépôt des parties de toit avant (P1 ; P2) dans la carrosserie du véhicule.

8. Véhicule automobile (1) selon la revendication 7,
**caractérisé en ce que**
les parties de cadre latérales (H3), dans la position fermée du hayon arrière (H1), se situent en affleurement avec des régions de carrosserie (3) du véhicule (1) se raccordant dans le sens de conduite (F) et s'étendant au-dessus de vitres latérales (2), qui comprennent au moins des longerons de toit.

9. Véhicule automobile (1) selon la revendication 8,
**caractérisé en ce que**
l'espace de passage (D1) est élargi par rapport à la largeur intérieure (D3) entre les longerons du toit (3) dans la direction transversale du véhicule.
